# EUROPEAN PATENT SPECIFICATION

(11) **EP 0 948 392 B1**
(45) Date of publication and mention of the grant of the patent: **01.09.2010**
(21) Application number: 97944667.1
(22) Date of filing: 17.10.1997
(51) Int. Cl.: B01D 69/10, B01D 69/14, B01D 67/00, B01D 71/28, B01D 71/78, B01D 71/80, B01D 71/82

(54) **Use of a charged porous membrane for water softening**
Verwendung einer geladenen porösen Membran zur Herstellung von Weichwasser
Utilisation d'une membrane poreuse chargée pour l'adoucissement de l'eau

(30) Priority: 18.10.1996 US 733792
(43) Date of publication of application: 13.10.1999
(73) Proprietor: McMASTER UNIVERSITY, Hamilton, Ontario L8S 4M1 (CA)
(72) Inventor: MIKA, Alicja, M., Hamilton, Ontario L8S 3E3 (CA); CHILDS, Ronald, F., Dundas, Ontario L9H 6J4 (CA); DICKSON, James, M., Hamilton, Ontario L8P 2X1 (CA)
(74) Representative: Smart, Peter John
(86) International application number: PCT/CA1997/000770
(87) International publication number: WO 1998/017377

(56) References cited:
- EP-A- 0 309 259
- EP-A- 0 474 617
- WO-A-87/06395
- WO-A-91/10498
- WO-A-92/05595
- WO-A-97/17129
- FR-A- 2 688 418
- US-A- 4 006 069
- US-A- 4 083 768
- US-A- 5 049 275
- JOURNAL OF MEMBRANE SCIENCE, vol. 108, 1995, page 37-56 XP002055563 cited in the application

## Description

### FIELD OF INVENTION

The present invention relates to a membrane separation process for water softening as defined in claim 1.

### BACKGROUND OF THE INVENTION

Membranes are used, for instance, in separation processes as selective barriers that allow certain chemical species to pass, i.e. the permeate, while retaining other chemical species, i.e. the retentate. Membranes are used in many applications, for example as biosensors, heparinised surfaces, facilitated transport membranes utilizing crown ethers and other carriers, targeted drug delivery systems including membrane-bound antigens, catalyst-containing membranes, treated surfaces, sharpened resolution chromatographic packing materials, narrow band optical absorbers, and in various water treatments which involve removal of a solute or contaminant, for example, dialysis, electrodialysis, microfiltration, ultrafiltration, reverse osmosis, nanofiltration and in electrolysis and in fuel cells and batteries.

There are a large number of supports or substrates for membranes. Specific physical and chemical characteristics to be considered when selecting a substrate include: porosity, surface area, permeability, solvent resistance, chemical stability, hydrophilicity, flexibility and mechanical integrity. Other characteristics may be important in certain applications.

In Mika et al., J. Membr. Sci., 108 (1995) pp 37 to 56, there is described a procedure for modifying microporous polypropylene and polyethylene membranes wherein 4-vinylpyridine is *in situ* polymerised into the pores of the membrane.

### SUMMARY OF THE INVENTION

We have found that, by cross-linking the membranes described by Mika et al. with a suitable cross-linking agent, such as divinylbenzene (DVB), there are provided charged membranes comprising porous microfiltration substrate membranes whose pores have located therein a cross-linked polyelectrolyte or hydrogel anchored to the substrate polymer, which exhibit significant ion rejection properties, enabling water softening to be effected, particularly at ultra-low pressure, such as the pressure of tap water, by removing multivalent ions, such as calcium and magnesium, in preference to monovalent ions, such as sodium.

The membranes further exhibit electrochemical separator properties which make them suitable for a wide variety of applications, including electrodialysis, battery separators, fuel cell separators and electrochemical synthesis.

In addition, the membrane may be used for Donnan dialysis, diffusion dialysis and pervaporation.

According to the invention, there is provided a membrane separation process for water softening by pressure driven membrane separation, characterised by employing a charged membrane which preferentially rejects multivalent ions over monovalent ions and by operating at a pressure of 70 psig (500 kPa) or less, said charged membrane comprising a porous substrate and a cross-linked polyelectrolyte or hydrogel located in the pores of the substrate.

The polyelectrolyte or hydrogel may be found in the pores of the substrate by *in situ* polymerization of a monomer or a mixture of monomers with a cross-linking agent, the monomer or at least one of the monomer mixture being selected from those monomers which contain a functional group that provides an ion-exchange site and those which contain a group which is susceptible to a chemical reaction by which such functional groups are subsequently introduced to the *in situ*-formed polymer.

Alternatively, the polyelectrolyte or hydrogel may be formed in the pores of the substrate by, first, *in situ* polymerization of a monomer or a mixture of monomers, the monomer or at least one of the monomers of the monomer mixture being selected from those monomers which contain a functional group that provides an ion-exchange site and those which contain a group which is susceptible to a chemical reaction by which such functional groups are subsequently introduced to the *in situ*-formed polymer, and, subsequently, cross-linking the *in situ*-formed polymer.

The properties of the cross-linked polyelectrolyte or hydrogel located in the pores of the substrate, by covalent bonding to or cross-linked around structural elements of the porous substrate may be modified for specific applications by selection of the appropriate degree of cross-linking.

### GENERAL DESCRIPTION OF INVENTION

The porous microfiltration substrate which is modified to provide the charged membranes used herein may comprise a porous substrate formed of polymeric material, such as polypropylene or polyethylene, into the pores of which may be *in situ* polymerized and cross-linked polyelectrolytes or hydrogels anchored to the substrate polymer by either covalent bonding to or cross-linked around the structural elements of the porous substrate.

For porous substrates, the pore diameters may vary widely but preferably range from about 0.01 to about 20 microns, more preferably from about 0.1 to about 5 microns and particularly from about 0.2 to about 1.0 microns. Pore diameters for microporous substrate are measured by the bubble-point method according to ASTM F-316.

The porosity or pore volume of a polymeric porous substrate used herein is preferably from about 25 to about 95%, more preferably from about 45 to about 85% and particularly from about 60 to about 80%. Porosity can be derived from the value of the bulk density of the porous substrate and the polymer density of substrate polymer according to ASTM D-792.

The thickness of substrate will depend on the intended use of the membrane product. For many uses, for example microfiltration, thicknesses ranging from about 1 to about 1000 microns, more preferably about 10 to about 240 microns and particularly about 20 to about 100 microns, would be suitable.

*In situ* polymerization of a suitable monomer to enable anchoring of polymeric molecules having ionizable groups may be effected by any convenient polymerization procedure, preferably by free-radical polymerization operation. Such free radical polymerization may include initiation of the polymerization by radiation initiation, thermal initiation or redox initiation. Typical initiators which may be used in the free radical polymerization include benzoin ethers and benzoyl peroxide. The *in situ* polymerization may include graft polymerization.

Monomers which are suitable for such *in situ* polymerization include unsaturated derivatives containing a functional group that provides, or can be modified by a post-polymerization treatment to provide, an ion-exchange site to permit formation of a polyelectrolyte or hydrogel. The membrane which is formed may be anionic or cationic, depending on the unsaturated monomer which is *in situ* polymerized. Suitable examples include 4-vinylpyridine, acrylic acid, methacrylic acid, styrene, vinylbenzyl chloride and acrylamido-alkyl-sulfonic acid, such as 2-acrylamido-2-methyl-1-propane sulfonic acid. The polymers so formed in the pores are non-extractable therefrom and hence anchored therein.

The cross-linking of the *in-situ* polymerized molecule to control or modulate conformational flexibility of such molecules may be effected by adding the cross-linking monomer to the *in-situ* polymerized monomer, so that the *in-situ* polymerization and cross-linking occur simultaneously. Alternatively, the cross-linking may be effected as a separate operation following the initial *in-situ* polymerization. The cross-linking which is formed may be covalent or ionic in nature and may be effected by radiation cross-linking.

The simultaneous *in situ* polymerization and cross-linking is preferred since the yield of the *in-situ* polymerization in terms of increase over the base weight of the substrate, is significantly increased thereby.

The cross-linking agent may be any suitable unsaturated molecule capable of reacting to produce cross-links in the *in-situ* polymerized molecules. The cross-linking agent may be a molecule containing at least two unsaturated moieties to permit the formation of cross-links. Examples of such monomers are divinylbenzene and divinylpyridine. Other examples of suitable cross-linking monomers are diacrylates, such as di(ethylene glycol) diacrylate, tetra(ethylene glycol) diacrylate or 1,6-hexanediol diacrylate.

The quantity of cross-linking monomer used depends on the membrane application and may vary up to about 30 wt% of the total weight of *in situ* polymerized monomer mixture. For water treatment under low pressure driven applications, the quantity of cross-linking monomer may run up to about 10%, preferably from about 0.25 to about 5 wt% of total weight *in situ* polymerized monomer mixture.

The polyelectrolytes may be cross-linked after they have been formed *in situ* in the pores by a post-polymerization treatment. The cross-linking agent used in this type of post-polymerisation cross-linking may be a molecule containing at least two or more functional groups capable of reacting with functional groups or other active sites on the *in situ* formed polymer to form covalent bonds or ionic bonds. Examples of molecules forming covalent bonds are dialkylating reagents, such as 1,3-dibromopropane, diacylating and triacylating reagents, such as isophthaloyl and trimesoyl chlorides, respectively, Examples of ionic cross-linking include complexes formed between multivalent transition metal ions and carboxylic acid groups.

The quantity of *in situ*-formed polymer depends on the membrane application and may vary from about 20 to about 400 wt% of the initial weight of the polymeric porous substrate. For water treatment under low pressure driven applications, the quantity of *in situ*-formed polymer may vary from about 30 to about 200 wt%, preferably from about 45 to about 100 wt% of weight of the polymeric porous substrate.

The amine type nitrogen atoms of incorporated polymers may be quanternized for certain applications, such as by alkylation, for example, with dimethyl sulphate, as well as alkyl halides, including arylalkyl halides.

Particular combinations of monomers for production of the cross-linked polyelectrolyte or hydrogel which may be employed include:
- an *in-situ* formed copolymer of vinylpyridine and a monomer selected from divinyl benzene and divinylpyridine,
- an *in-situ* formed polyvinylpyridine which is subsequently cross-linked with an alkylating agent, such as 1,3-dibromo-propane,
- an *in-situ* copolymer of vinylbenzylchloride and divinylbenzene into which the ion-exchange functional groups are introduced by reaction with a tertiary amine,
- an *in-situ* formed copolymer of styrene and divinylbenzene into which the ion-exchange functional groups are introduced by sulfonation,
- an *in-situ* formed copolymer of acrylic acid or methacrylic acid and divinylbenzene,
- an *in-situ* formed copolymer of acrylic acid or methacrylic acid and a diacrylate,
- an *in-situ* formed copolymer of acrylic acid or methacrylic acid and tetra(ethyleneglycol) diacrylate.
- an *in-situ* formed copolymer or an 2-acrylamide 2-methyl-1-propane sulfonic acid and tetra (ethyleneglycol) diacrylate.

Microporous polypropylene or polyethylene membranes which have about 45 to about 100 wt% by weight of polymeric porous substrate of *in situ* polymerized vinylpyridine and which are cross-linked with about 0.25 to about 5 wt% by weight of the total monomers by divinylbenzene are particularly useful in pressure driven water treatment, i.e. reverse osmosis or nanofiltration, possessing the property to reject multivalent cations in preference to monovalent cations. By varying the degree of the amount of the *in situ*-formed polymer and the degree and properties of the cross-linking, the membrane may be modified to be specific for specific applications.

### Ion rejection and use of charged membranes:

The charged membranes, comprising a non-ionic, porous substrate having pores which are filled with a cross-linked polyelectrolyte bound to or around the structural elements of the substrate polymer, are capable of rejecting both inorganic and organic ions from water at pressures as low as 345 kPa (50 psig), a pressure which is within the range of tap water delivery pressure. Such preferential rejection is seen at even lower pressure down to 150 kPa (20 psig).

The rejection of salts containing monovalent cations, for example, Na⁺, is substantially lower than rejection of salts with multivalent cations, for example, Mg²⁺, Ca²⁺. Charged organic materials, such as organic acids and salts, also are rejected by the membranes, while relatively large non-ionic organic molecules, such as sucrose, have low rejections by the membranes. The ability of the membranes to function at such ultra-low pressures and their distinctive pattern of separations distinguishes the membranes from commercially available nanofiltration or reverse osmosis membranes, which function only effectively at higher pressures and generally exhibit high rejections of large non-ionic organic molecules.

Unlike commercial membranes, the pore-filled membranes provided herein exhibit quite a different dependence of the ratio of permeate flux with a salt solution as feed to permeate flux with pure water as feed on pressure. At low pressures, a 0% DVB cross-linked grafted material has a permeate to pure water flux which exceeds 1. This ratio decreases with increasing pressure due either changes in the membrane itself or concentration polarization. With a 1% cross-linking, the ratio at low pressure is reduced somewhat below 1 but is essentially pressure independent. With 4% cross-linking, the membrane starts to behave much more like a typical commercial thin-film composite membrane.

The ability of the membranes provided herein to effect ultra-low pressure ion-rejection has wide application of use in water treatment technology to soften water without removing most non-ionic organic matter from water. Such applications may range from domestic water softening operations to the removal of calcium from tap water supplied to air conditioning systems as well as to water softening applications generally.

Existing commercial membranes used for water softening are limited by an excessive and indiscriminate rejection of all dissolved species and this is particularly true with thin-film composite membranes, commercial examples being low-pressure nanofiltration membranes available from FilmTec and Fluid Systems. Other nanofiltration membranes which have been developed specifically for removal of organic materials from water, generally humic acid derivatives, exhibit a low removal of ions, including calcium. The recommended operating pressures for commercially available low pressure nanofiltration membranes are higher than those found to be sufficient for the invented membranes.

### EXAMPLES

In the specific Examples which follow, polypropylene (PP) or polyethylene (PE) microporous substrates were used which had an average pore diameter of about 0.2 µm, a thickness of about 50 µm and a porosity of about 65 to 70 volume percent. Such polypropylene substrates were made following the procedure described in U.S. Patent No. 4,726,989 (Marozinski) while the polyethylene substrates were made following the procedure described in U.S. Patent No. 4,539,265 (Shipman).

### Example 1:

This Example illustrates the preparation of membranes.

The PP and PE substrates were subjected to *in situ* polymerization of 4-vinylpyridine (4VP) with varying amounts of divinylbenzene (DVB)to provide anion-exchange membranes. Divinylbenzene of technical grade containing 55% of a mixture of monomers, was purchased from Aldrich Chemical Company, St. Louis, MO and was initially purified by vacuum distillation. All reagents employed in the membrane preparations described herein were purchased from Aldrich Chemical Company.

### A. Thermally-initiated in situ polymerization:

In thermally-initiated *in situ* polymerization from the vapour phase, the porous PP or PE substrate was coated with benzoyl peroxide (BPO) by immersing it in an acetone solution containing 1% BPO and 1% poly(vinyl acetate) for 5 to 10 minutes and subsequent drying it in air. The coated substrate was suspended inside a glass reactor containing on its bottom 2 to 3 mL of a vinylpyridine/DVB mixture. After the pressure inside the reactor had been reduced below 10 mmHg, the reactor was heated to 80°C for half an hour to effect the polymerization.

### B. Photo-initiated in situ polymerization:

In photo-initiated *in situ* polymerization from solution, the porous PP or PE substrate was wetted with vinylpyridine, DVB and 1 to 1.5% of benzoin ethyl ether as a photo-initiator. The wetted substrate was degassed in a freeze-thaw cycle and irradiated using light of wavelength 350 nm for 30 minutes.

In each such procedure, unbound homopolymer was removed from the membranes by extraction with boiling methanol until no further mass loss occurred.

### C. Quaternization:

Quaternization of amine groups in the *in situ* formed cross-linked polymer was effected by immersing the membrane into a solution containing 5 to 10% by volume of dimethyl sulfate in methanol at room temperature for 16 to 24 hours followed by subsequent thorough wash of the membrane with methanol and, finally, with deionized water. In an alternative procedure, the membrane was immersed into a solution containing about 5 wt% of dimethylsulfate in N,N-dimethyl-formamide at room temperature for 30 to 60 minutes followed by subsequent thorough wash of the membrane with deionized water.

### D. Cross-linking with 1,3-dibromopropane:

Quaternization and cross-linking of amine groups in the *in situ* formed cross-linked polymer was effected with 1,3-dibromopropane carried out using a solution that contained 0.05 mol of 1,3-dibromopropane per 1 mol of pyridine nitrogen in the membrane dissolved in 100 to 150 mL of methanol. The membrane was placed in the solution and heated under reflux for 70 hours.

### E. Cross-linking with α,α'-dibromo-ρ-xylene:

Quaternization and cross-linking of amine groups in the *in situ*-formed polymer was also carried out with α,α'-dibromo-p-xylene using a solution that contained 0.5 g of α,α'-dibromo-ρ-xylene in 80 mL of methanol. The ratio of a,a'-dibromo-ρ-xylene to pyridine nitrogen in the membrane was 5 to 1. The membrane was placed in the solution and heated under reflux for 16 hours.

### Example 2

This Example shows the water softening capability of the membranes prepared as described in Example 1, in comparison to known membranes, as described by Fu et al., Journal AWWA, 86, 55 to 72 (1994).

### A. Commercially-available membranes:

Four commercially-available thin-film composite membranes were tested for their ability to reject organic and inorganic components. Table I provides the chemical and physical characteristics of the membranes while Table II provides the performance data.

**TABLE I**

| Characteristics of thin-film composite (TFC) nanofiltration membranes | | | | |
|---|---|---|---|---|
| Membrane | Material | Rated Operating Pressure kPa (psig) | Flux at Rated Pressure L/m²h (gpd/sq ft) | Permeability L/m²h kPa (gpd/sq ft psig) |
| NF70⁽¹⁾ | modified aromatic polyamide | 483 (70) | 37 (22) | 0.118 (0.48) |
| TFCS⁽²⁾ | modified aromatic polyamide | 552 (80) | 26 (15) | 0.049 (0.20) |
| NTR7450⁽³⁾ | sulfonated polyether sulfone | 986 (143) | 93 (55) | 0.106 (0.43) |
| NTR7410⁽³⁾ | sulfonated polyether sulfone | 986 (143) | 496 (292) | 0.185 (0.75) |

| | | | | |
|---|---|---|---|---|
| (1) FilmTec, Minneapolis, Minn. (2) Fluid Systems, San Diego, CA. (3) Nitto Denko from Hydranautics, San Diego, CA. | | | | |

**TABLE II**

| Rejection (%) of organics and inorganics by TFC nanofiltration membranes | | | | | |
|---|---|---|---|---|---|
| Membrane | Color | TOC | Conductivity | Alkalinity | Calcium |
| NF70 | >97.5 | 94 | 90 | 93 | 98.5 |
| TFCS | >97.5 | 96 | 92 | 94 | 98.5 |
| NTR7450 | >97.5 | 93 | 30 | 32 | 35.0 |
| NTR7410 | 97.0 | 86 | 10 | 5 | N/A |

### B. Membranes of Example 1:

(a) A membrane prepared as described in Example 1 by the photo-initiated *in-situ* polymerization procedure was tested for its water softening ability on untreated tap water alone or in combination with organic materials at a flux of 2.52 L/m²h at 345 kPa (50 psig). The membrane was a polypropylene base membrane *in situ* polymerized with 4-vinylpyridine containing 1.2% divinylbenzene. This membrane was subsequently quaternized by treatment with dimethyl sulphate as described in Example 1. The results obtained for individual runs of approximately 24 hours, which were reproducible over long term testing, are set forth in the following Table III:

**TABLE III**

| COMPONENT | RUN 1⁽¹⁾ | | RUN 2⁽²⁾ | | RUN 3⁽³⁾ | |
|---|---|---|---|---|---|---|
| | Feed, ppm | Rejection, % | Feed, ppm | Rejection, % | Feed, ppm | Rejection % |
| Sodium | 19.5 | 71.3 | 13.3 | 38.8 | 13.3 | 60.0 |
| Magnesium | 12.0 | 97.4 | 10.4 | 58.6 | 8.9 | 91.0 |
| Calcium | 49.8 | 92.6 | 41.9 | 57.1 | 36.4 | 82.1 |
| Acetate | | | 115.8 | 48.2 | | |
| Chloride | | | 16.9 | 51.0 | | |
| Sulfate | | | UD⁽⁴⁾ | 99.5+ | | |
| Sucrose | | | | | 558.4 | 12.9 |

| | | | | | | |
|---|---|---|---|---|---|---|
| Notes: (1) Run 1 = Tap water (2) Run 2 = Tap water + 100 ppm acetic acid (3) Run 3 = Tap water + 550 ppm sucrose (4) UD = undetectable due to precipitation of CaSO₄ at increased concentrations of Ca²⁺ in the feed. | | | | | | |

As may be seen from these data, the charged membranes effected water softening since they remove calcium and other bivalent ions to a much larger extent than sodium ions. The results also show that the membranes are able to remove charged organics (acetate).
Operation at 50 psig permits the membranes to be driven directly from a municipal water supply, with no pretreatment and with no additional pressurization being required and at pressures significantly lower than the commercially-available membranes shown in Table 1 and 2.
(b) Two different membranes prepared as described in Example 1 by the thermally-initiated vapor phase *in situ* polymerization (Membrane A) and the photochemical *in situ* polymerization method (Membrane B) were tested for their water-softening ability on untreated tap water. Membrane A was a polypropylene membrane *in situ* polymerized with 4-vinylpyridine containing 1.1 wt% of divinylbenzene. This membrane was subsequently quaternized by treatment with dimethyl sulphate as described in Example 1. Membrane B was a polypropylene membrane *in situ* polymerized with 4-vinylpyridine containing 1.2 wt% divinylbenzene. This membrane was subsequently quaternized by treatment with dimethyl sulphate as described in Example 1 (same membrane as Example 2(B)(a)).

The results are set forth in the following Table IV:

**TABLE IV**

| Ion | Feed ppm | Membrane A Rejection % 345 kPa (50 psi) | Membrane A Rejection % 140 kPa (20 psi) | Membrane B Rejection % 345 kPa (50 psi) |
|---|---|---|---|---|
| Sodium | 23.3 | 45.9 | 12.7 | 63.6 |
| Magnesium | 22.4 | 82.1 | 61.6 | 90.8 |
| Calcium | 85.5 | 66.4 | 29.7 | 88.4 |
| Chloride | 44.8 | 68.5 | 31.1 | 77.0 |
| Sulphate | 13.4 | 89.6 | 56.0 | > 99.5 |
| Flux (L/m²h) | | 5.76 | 2.12 | 2.52 |

These results show that substantial water softening is achieved at conventional tap pressures and that a pressure as low as 20 psi still provided substantial water softening.

### Example 3

This Example illustrates the flux and rejection of cations from tap water using membranes prepared as described in Example 1.

Several different membranes, prepared following both the thermally-initiated and photoinitiated *in situ* polymerization procedures of Example 1, were tested for their flux and the ability to reject cations from tap water under a pressure of 345 kPa (50 psi). The results obtained are summarized in the following Table V:

**TABLE V**

| No. | Membrane Characteristics | | | Flux kg/m²h | Rejection, % | | |
|---|---|---|---|---|---|---|---|
| | Substrate | %DVB | Mass Gain, % | | Na | Mg | Ca |
| Membranes prepared by photoinitiated polymerization | | | | | | | |
| 1 | PP | 3.0 | 212.4 | 1.0- 1.7^{a} | 51 | 68 | 56 |
| 2 | PP | 1.2 | 147.0 | 2.3 | 71 | 97 | 93 |
| 3 | PP | 0.5 | 60.5 | 4.1 | 40 | 65 | 59 |
| 4 | PP | 0.5 | 131.6 | 2.5 | 67 | 82 | 80 |
| 5 | PP | 0.3 | 124.7 | 4.1 | 47 | 60 | 60 |
| 6 | PE | 0.3 | 209.8 | 3.8 | 53 | 83 | 77 |
| 7 | PE | 0.00 | 67.5 | 11.5 | 6 | 8 | 8 |
| Membranes prepared by thermally-initiated vapour-phase polymerization | | | | | | | |
| 10 | PP | 1.0 | 350.9 | 5.5 | 62 | 85 | 80 |

| | | | | | | | |
|---|---|---|---|---|---|---|---|
| Notes: ^{a} obtained with two samples prepared under identical conditions; measured under 1000 kPa and extrapolated to 345 kPa (50 psi) | | | | | | | |

As may be seen from the results set forth in the above Table V, membranes produced by photoinitiated polymerization exhibit several characteristics. By comparing experiments 3 and 4, it can be seen that the flux decreases with mass gain. Flux also decreases with increasing levels of cross-linking monomer(experiments 4 and 5). The separation level generally increases with increasing levels of cross-linking monomer. A trade-off exists among quantity of *in situ*-formed polymer, cross-linking, flux and separation. The polyethylene substrate produced membranes with higher fluxes than the polypropylene substrate for the same level of cross-linking and had a higher mass gain.

### Example 4

This Example further illustrates the flux and rejection of cations from tap water using membranes prepared as described in Example 1 at a higher cross-linking and lower incorporation levels in comparison to Example 3.

A membrane was prepared generally following the photoinitiated *in situ* polymerization procedure of Example 1 to provide a polyethylene microporous membrane (PE) having a incorporation of 58% poly(4-vinylpyridine) cross-linked with 4% divinybenzene and quaternized.

The membrane was prepared by a photochemical grafting (anchoring) procedure using 2,2-dimethoxy-2-phenylacetophenone as initiator. The contacting solution in the photografting was vinylpyridine with 4% divinylbenzene as a cross-linker diluted with pyridine, with the ratio of vinylpyridine/divinylbenzene to pyridine was 80:20. The presence of the pyridine leads to an improved uniformity in incorporation. The membrane was quaternized by treatment with dimethyl sulfate in dimethylformamide, which is a better solvent for nucleophilic substitution reactions than methanol and allows not only to reduce the reaction time to less than an hour but also makes the reaction less sensitive to impurities, such as moisture.

Tests were conducted using this membrane at 500 kPa (72.5 psig) and converted to a temperature of 25°C for flux and the ability to reject cations from tap water and to reject sucrose from aqueous solution thereof. The membrane was cleaned by treatment with aqueous HCl (0.01M) after tap water tests and after sucrose tests, which restored the properties of the membrane to their original values. The membrane was also tested at 345 kPa (50 psig) and 100 kPa (145 psig) on tap water. The results obtained at 500 kPa (72.5 psig) are outlined in the following Table VIA:

**TABLE VIA**

| Feed | Flux (kg/m²/h) | Separation Na⁺(%) | Separation Mg²⁺ | Separation Ca²⁺ | Separation Sucrose |
|---|---|---|---|---|---|
| De-ionized Water | 41 | - | - | - | - |
| 54 ppm NaCl | 48 | 62 | - | - | - |
| 109 ppm NaCl | 52 | 43 | - | - | - |
| Tap Water | 46 | 26 | 36 | 36 | - |
| 60 ppm NaCl plus 547 ppm sucrose | 41 | 49 | - | - | 12 |
| De-ionized Water | 43 | - | - | - | - |
| 126 ppm NaCl | 43 | 41 | - | - | - |

The results obtained at 345 kPa (50 psig) and 100 kPa (14.5 psig) are set forth in the following Table VIB:

**TABLE VIB**

| Pressure | Flux (kg/m²/h) | Separation Na⁺ (%) | Separation Mg²⁺ | Separation Ca²⁺ (%) |
|---|---|---|---|---|
| 345 kPa (50 psig) | 36 | 26 | 38 | 37 |
| 100 kPa (14.5 psig) | 12 | 9 | 30 | 28 |

As may be seen from the data presented in Tables VIA and VIB, using a microporous polyethylene substrate, the flux of the membrane has been increased in comparison to the results shown in Table V in Example 3. This result has been achieved by increasing the degree of cross-linking coupled with a decrease in the amount of material contained within the pores.

As compared to the results in Table V, there is some loss in separation which may be restored by increasing the loading, at the expense of flux. While fouling of the membrane occurred during the course of the experiments, the membranes were restored to their initial performance values by a simple dilute acid wash.

As may be seen from Table VIA, the tested membrane gave a very low separation of sucrose, confirming the data shown in Table III. This result contrasts with the results obtained under the same conditions using a typical commercial nano-filtration membrane (Osmonics BQ01 membrane), as set forth in the following Table VII:

**TABLE VII**

| Feed | Flux (kg/m²/h) | Separation Na⁺ (%) | Separation Mg²⁺ | Separation Ca²⁺ | Separation Sucrose |
|---|---|---|---|---|---|
| De-ionized Water | 39 | - | - | - | - |
| 54 ppm NaCl | 46 | 83 | - | - | - |
| 109 ppm NaCl | 48 | 68 | - | - | - |
| Tap Water | 33 | 19 | 27 | 31 | - |
| 60 ppm NaCl plus 547 ppm sucrose | 31 | 51 | - | - | 61 |
| De-ionized Water | 28 | - | - | - | - |
| 126 ppm NaCl | 27 | 28 | - | - | - |

As may be seen from the data in Table VII, a steady decline in flux occurred during the experiments, which was not restored by the cleaning cycle. As also may be seen, this commercial membrane had a high separation of sucrose in contrast to the results in Table VI, although in other respects the results are comparable.

A further comparison was made under the same process conditions with a Hydranautics nanofiltration prototype membrane (7450) and the results are set forth in the following Table VIII:

**TABLE VIII**

| Feed | Flux (kg/m²/h) | Separation Na⁺ (%) | Separation Mg²⁺ | Separation Ca²⁺ | Separation Sucrose |
|---|---|---|---|---|---|
| De-ionized Water | 14 | - | - | - | - |
| 54 ppm NaCl | 14 | 86 | - | - | - |
| 109 ppm NaCl | 14 | 77 | - | - | - |
| Tap Water | 14 | 33 | 65 | 68 | - |
| 60 ppm NaCl plus 547 ppm sucrose | 15 | 72 | - | - | 97 |
| De-ionized Water | 16 | - | - | - | - |
| 126 ppm NaCl | 15 | 58 | - | - | - |

As may be seen from the data in Table VIII, this membrane exhibits higher separation than achieved in Table VIA but at a substantially lower flux. A very high sucrose separation is marked contrast to the results of Table VIA. In addition, which the flux remained constant throughout the experiments, there was a loss of separation of NaCl with time and cleaning cycles did not restore the separation.

As may be seen from the data presented in the Example, the membranes used in accordance with the invention exhibited much better long term stability than the commercial membranes, comparable or better separations and quite different behaviour with sucrose/salt mixtures.

### Example 5

This Example illustrates the preparations of cation-exchange membrane.
A. A first series of cation-exchange membranes was prepared using a polypropylene (PP) microporous substrate with a pore filler derived by photopolymerization of a 50 wt% methacrylic acid solution in water using benzophenone as a photoinitiator, and employing either divinylbenzene or tetra(ethyleneglycol) diacrylate as a cross-linking agent, following the procedure of Example 1.
   A first membrane (BT10) comprised poly(methacrylic acid) with 1% divinylbenzene and had an incorporation yield of 123%. This membrane was evaluated for the water-softening ability, as described in the following Example.
   A second membrane (BT12) comprised poly(methacrylic acid) with 2% tetra(ethyleneglycol) diacrylate and had an incorporation yield of 120%. The measured ion-exchange capacity was 5.5 meq/g.
   B. A second series of cation-exchange membranes were prepared from a PP microporous substrate having poly(2-acrylamido-2-methyl-1-propane sulphonic acid) anchored in the pores and lightly cross-linked with teta(ethyleneglycol) diacrylate. The polymerizations were carried out in the pores of the substrate using 1 part of 2-acrylamido-2-methyl-1-propane dissolved in a mixture of water (1 part) and methanol (1 part), the diacrylate cross-linker and benzophenone as photoinitiator. Incorporation yields ranged from 150 to 400%. The performance of one of these membranes having 4% cross linking, in pressure-driven water treatment was examined, as outlined below.

### Example 6

This Example illustrates the water softening capability of cation exchange membranes.
A. Membrane BT10, prepared as described in Example 5, was tested for the water softening ability on tap water at 354 kPa (50 psig) at a flux of 1.22 kg/m²h. the rejection achieved was as follows:

| | |
|---|---|
| Na⁺ | 16% |
| Mg⁺⁺ | 61% |
| CA⁺⁺ | 65% |
| Cl⁻ | 5% |
| SO₄⁻ | 42% |

The separations which were achieved using the cation-exchange membrane based on poly(methacrylic acid) are comparable to those achieved using the anion-exchange membranes based on poly(4-vinylpyridine) at comparable fluxes.
B. Membrane BT16, prepared as described in Example 5, was tested for its water softening ability at 345 kPa (50 psig) in the treatment of tap water and in single salt separations at 483 kPa (70 psig). The rejection achieved on tap water (50 psig) at a flux rate of 1.9 kg/m²h was as follows:

| | |
|---|---|
| Na⁺ | 14% |
| Mg⁺⁺ | 29% |
| CA⁺⁺ | 31% |
| Cl⁻ | 20% |
| SO₄⁻ | 51% |

The results obtained for single salt separations (70 psig) are set forth in the following Table XV:

**TABLE XV**

| SALT (0.002M) | FLUX (KG/M²H. AT 70 PSIG) | REJECTION |
|---|---|---|
| NaCl | 2.95 | 65 |
| CaCl₂ | 2.7 | 19 |
| NaSO₄ | 3.17 | 93 |

The fluxes achieved with these cation-exchange membranes were high and comparable to the poly(vinylpyridine) based membranes. The pattern of separations observed with the single salts in Table XV was that expected for a negatively-charged membrane.

### SUMMARY OF DISCLOSURE

In summary of this disclosure, the present invention provides membranes having unique properties in a variety of applications. Modifications are possible within the scope of this invention.

## Claims

1. A membrane separation process for water softening by pressure driven membrane separation, **characterised by** employing a charged membrane which preferentially rejects multivalent ions over monovalent ions and by operating at a pressure of 70 psig (500 kPa) or less, said charged membrane comprising a porous substrate and a cross-linked polyelectrolyte or hydrogel located in the pores of the substrate.

2. The process claimed in Claim 1 which is effected at a pressure of from 140 kPa (20 psig) to 345 kPa (50 psig).

3. The process claimed in Claim 1, wherein said membrane comprises a microporous substrate in the pores of which is in situ polymerised vinylpyridine combined with 0.25 to 5 wt.% of total monomers of divinylbenzene.

4. The process claimed in Claim 3, wherein amine groups in the polyelectrolyte are quaternized.

5. The process claimed in Claim 1, wherein the polyelectrolyte or hydrogel is formed in the pores of the substrate by in situ polymerisation of a monomer or a mixture of monomers with a cross-linking agent, the monomer or at least one of the monomers of the monomer mixture being selected from those monomers which contain a functional group that provides an ion-exchange site and those which contain a group which is susceptible to a reaction by which such functional groups are subsequently introduced to in situ-formed polymer.

6. The process claimed in Claim 1, wherein the polyelectrolyte or hydrogel is formed in the pores of substrate by, first, in situ polymerisation of a monomer or a mixture of monomers, the monomer or at least one of the monomers of the monomer mixture being selected from those monomers which contain a functional group that provides an ion-exchange site and those which contain a group which is susceptible to a chemical reaction by which such functional groups are subsequently introduced to the in situ-formed polymer, and, subsequently, cross-linking in situ-formed polymer.

7. The process claimed in Claim 1, wherein the polyelectrolyte is a copolymer of vinylpyridine and a monomer selected from divinylbenzene and divinylpyridine.

8. The process claimed in Claim 7, wherein the polyvinylpyridine is quaternized with an alkyl or aryl substituted alkyl halide or sulphate.

9. The process as claimed in Claim 1, wherein the substrate is a microporous polyolefin substrate.

10. The process as claimed in Claim 9, wherein the polyolefin is polypropylene or polyethylene.

11. The process claimed in Claim 1, wherein the properties of the bound polyelectrolyte or hydrogel are modified for a specific membrane and separation process by selection of the degree and type of cross-linking of the polyelectrolyte or hydrogel.

12. The process claimed in Claim 1, wherein said porous substrate is a microporous polypropylene substrate and said polyelectrolyte or hydrogel located in the pores of the microporous polypropylene substrate is poly(4-vinylpyridine) cross-linked with divinylbenzene and N-methylated with dimethyl sulfate.

## Patentansprüche

1. Membrantrennverfahren zur Wasserenthärtung durch druckgetriebene Membrantrennung, **gekennzeichnet durch** die Verwendung einer geladenen Membran, die vorzugsweise mehrwertige Ionen gegenüber einwertigen Ionen abweist, und **durch** Arbeiten unter einem Druck von 70 psig (500 kPa) oder weniger, wobei die genannte geladene Membran ein poröses Substrat und einen vernetzten Polyelektrolyt oder ein vernetztes Hydrogel umfasst, die sich in den Poren des Substrats befinden.

2. Verfahren nach Anspruch 1, das unter einem Druck von 140 kPa (20 psig) bis 345 kPa (50 psig) durchgeführt wird.

3. Verfahren nach Anspruch 1, wobei die genannte Membran ein mikroporöses Substrat umfasst, in dessen Poren sich in situ polymerisiertes Vinylpyridin befindet, das mit 0,25 bis 5 Gew.-%, bezogen auf die Gesamtmonomere von Divinylbenzol, kombiniert wird.

4. Verfahren nach Anspruch 3, wobei Aminogruppen in dem Polyelektrolyt quaterniert sind.

5. Verfahren nach Anspruch 1, wobei der Polyelektrolyt oder das Hydrogel in den Poren des Substrats durch in situ Polymerisation eines Monomers oder einer Mischung von Monomeren mit einem Vernetzungsmittel gebildet wird, wobei das Monomer oder mindestens eines der Monomere der Mischung von Monomeren aus den Monomeren ausgewählt sind, die eine funktionelle Gruppe enthalten, die eine Ionenaustauschstelle bereitstellt, und den Monomeren, die eine Gruppe enthalten, die für eine Reaktion geeignet ist, bei der solche Gruppen anschließend in das in situ gebildete Polymer eingeführt werden.

6. Verfahren nach Anspruch 1, wobei der Polyelektrolyt oder das Hydrogel in den Poren des Substrats durch zunächst in situ Polymerisation eines Monomers oder einer Mischung von Monomeren mit einem Vernetzungsmittel gebildet wird, wobei das Monomer oder mindestens eines der Monomere der Mischung von Monomeren aus den Monomeren ausgewählt sind, die eine funktionelle Gruppe enthalten, die eine Ionenaustauschstelle bereitstellt, und den Monomeren, die eine Gruppe enthalten, die für eine chemische Reaktion geeignet ist, bei der solche Gruppen anschließend in das in situ gebildete Polymer eingeführt werden, und nachfolgend durch Vernetzung in situ gebildetes Polymers.

7. Verfahren nach Anspruch 1, wobei der Polyelektrolyt ein Copolymer von Vinylpyridin und einem Monomer ist, das aus Divinylbenzol und Divinylpyridin ausgewählt ist.

8. Verfahren nach Anspruch 7, wobei das Polyvinylpyridin mit einem Alkyl- oder Aryl-substituierten Alkylhalogenid oder Sulfat quaterniert ist.

9. Verfahren nach Anspruch 1, wobei das Substrat ein mikroporöses Polyolefinsubstrat ist.

10. Verfahren nach Anspruch 9, wobei das Polyolefin Polypropylen oder Polyethylen ist.

11. Verfahren nach Anspruch 1, wobei die Eigenschaften des gebundenen Polyelektrolyts oder Hydrogels für eine bestimmte Membran und Trennverfahren durch die Auswahl des Grades und der Art der Vernetzung des Polyelektrolyts oder des Hydrogels modifiziert sind.

12. Verfahren nach Anspruch 1, wobei das genante poröse Substrat ein mikroporöses Polypropylensubstrat ist und der genannte Polyelektrolyt oder das genannte Hydrogel, die sich in den Poren des mikroporösen Polypropylensubstrats befinden, mit Divinylbenzol vernetztes und mit Dimethylsulfat N-methyliertes Poly(4-vinylpyridin) ist.

## Revendications

1. Procédé de séparation à membrane pour l'adoucissement de l'eau par séparation à membrane commandée par la pression, **caractérisé par** l'emploi d'une membrane chargée qui rejette préférentiellement les ions multivalents par rapport aux ions monovalents et par le fonctionnement à une pression de 70 psig (500 kPa) ou moins, ladite membrane chargée comprenant un substrat poreux et un polyélectrolyte ou hydrogel réticulé situé dans les pores du substrat.

2. Procédé selon la revendication 1 qui est mis en oeuvre à une pression de 140 kPa (20 psig) à 345 kPa (50 psig).

3. Procédé selon la revendication 1 où ladite membrane comprend un substrat microporeux dans les pores duquel de la vinylpyridine combinée avec 0,25 à 5 % en poids de monomères totaux du divinylbenzène est polymérisée in situ.

4. Procédé selon la revendication 3 où les groupes amine dans le polyélectrolyte sont quaternisés.

5. Procédé selon la revendication 1 où le polyélectrolyte ou hydrogel est formé dans les pores du substrat par polymérisation in situ d'un monomère ou d'un mélange de monomères avec un agent réticulant, le monomère ou au moins l'un des monomères du mélange de monomères étant choisi parmi les monomères qui contiennent un groupe fonctionnel qui fournit un site d'échange d'ions et ceux qui contiennent un groupe qui est susceptible d'une réaction par laquelle de tels groupes fonctionnels sont ensuite introduits dans le polymère formé in situ.

6. Procédé selon la revendication 1 où le polyélectrolyte ou hydrogel est formé dans les pores des substrats tout d'abord par polymérisation in situ d'un monomère ou d'un mélange de monomères, le monomère ou au moins l'un des monomères du mélange de monomères étant choisi parmi les monomères qui contiennent un groupe fonctionnel qui fournit un site d'échange d'ions et ceux qui contiennent un groupe qui est susceptible d'une réaction chimique par laquelle de tels groupes fonctionnels sont ensuite introduits dans le polymère formé in situ, puis réticulation du polymère formé in situ.

7. Procédé selon la revendication 1 où le polyélectrolyte est un copolymère de vinylpyridine et d'un monomère choisi parmi le divinylbenzène et la divinylpyridine.

8. Procédé selon la revendication 7 où la polyvinylpyridine est quaternisée avec un halogénure ou sulfate d'alkyle substitué par alkyle ou aryle.

9. Procédé selon la revendication 1 où le substrat est un substrat de polyoléfine microporeux.

10. Procédé selon la revendication 9 où la polyoléfine est le polypropylène ou le polyéthylène.

11. Procédé selon la revendication 1 où les propriétés du polyélectrolyte ou hydrogel lié sont modifiées pour une membrane spécifique et un procédé de séparation spécifique par le choix du degré et du type de réticulation du polyélectrolyte ou hydrogel.

12. Procédé selon la revendication 1 où ledit substrat poreux est un substrat de polypropylène microporeux et ledit polyélectrolyte ou hydrogel situé dans les pores du substrat de polypropylène microporeux est la poly(4-vinylpyridine) réticulée avec le divinylbenzène et N-méthylée avec le sulfate de diméthyle.
